# EUROPEAN PATENT APPLICATION

(11) **EP 4 509 558 A1**
(43) Date of publication of application: **19.02.2025**
(21) Application number: 23788392.1
(22) Date of filing: 13.04.2023
(51) Int. Cl.: C08L 7/00, B60C 1/00, C08K 3/013, C08K 3/04, C08K 3/36, C08K 5/25, C08K 5/548

(54) **RUBBER COMPOSITION**

(30) Priority: 14.04.2022 JP 2022066664
(71) Applicant: Otsuka Chemical Co., Ltd., Osaka-shi, Osaka 540-0021 (JP)
(72) Inventor: KOJIMA, Masaaki, Tokushima-shi, Tokushima 771-0193 (JP)
(74) Representative: Meissner Bolte Partnerschaft mbB
(86) International application number: PCT/JP2023/015004
(87) International publication number: WO 2023/199974

(57) **Abstract**

An object of the present invention is to provide a rubber composition that can improve reinforcement and heat resistance while also improving fuel efficiency, when carbon black and silica are blended with natural rubber, for example, in application in tires. The rubber composition contains a rubber component, a hydrazone compound, carbon black, silica, and 3-octanoylthio-1-propyltriethoxysilane, wherein natural rubber is present in an amount of 50 parts by mass or more in 100 parts by mass of the rubber component; per 100 parts by mass of the rubber component, the hydrazone compound is present in an amount of 0.1 parts by mass to 2 parts by mass, the carbon black is present in an amount of 15 parts by mass to 60 parts by mass, and the silica is present in an amount of 18 parts by mass to 80 parts by mass; and per 100 parts by mass of the silica, the 3-octanoylthio-1-propyltriethoxysilane is present in an amount of 3 parts by mass to 10 parts by mass.

## Description

### Technical Field

The present invention relates to a rubber composition.

### Background Art

Rubber compositions used in tires mainly contain natural rubber (NR), which has excellent strength and durability, for the rubber component.

Currently, the development of rubber compositions with higher fuel efficiency is being pursued. With the aim of further improving fuel efficiency, there is a trend to add a predetermined amount of silica to natural rubber, in addition to carbon black as a filler, in rubber compositions used for tires. There is demand for the development of rubber compositions, such as these systems containing carbon black and silica with natural rubber, that further enhance fuel efficiency.

PTL 1 discloses a method for producing a rubber composition containing a rubber component containing at least one selected from natural rubber and synthetic diene rubber (A), a filler containing an inorganic filler (B), a silane coupling agent (C), and a hydrazide compound (D), including kneading the rubber composition in multiple steps, wherein in the first step of kneading, the rubber component (A), all or a part of the inorganic filler (B), all or a part of the silane coupling agent (C), and the hydrazide compound (D) are kneaded.

PTL 2 discloses a method for producing a rubber composition, including a first kneading step in which a rubber component containing natural rubber and a modified conjugated diene polymer having at least one nitrogen-containing functional group (A) and at least one filler (B) are kneaded, a second kneading step in which a hydrazide compound (C) is kneaded into the rubber composition obtained in the first kneading stage, and a final kneading step in which a vulcanizing agent and a vulcanization accelerator are kneaded into the rubber composition obtained in the second kneading step.

### Citation List

### Patent Literature

PTL 1: JP2013-144761A
PTL 2: JP2014-005381A

### Summary of Invention

### Technical Problem

In view of the current status described above, the present invention aims to solve the conventional problems and achieve the following object.

An object of the present invention is to provide a rubber composition that improves reinforcement and heat resistance while also improving fuel efficiency when carbon black and silica are blended with natural rubber, for example, in a rubber composition for use in tires.

### Solution to Problem

In order to achieve the object, the present inventor conducted extensive research and succeeded in obtaining a rubber composition that improves reinforcement and heat resistance while also improving fuel efficiency, for example in application in tires, by adding a combination of a hydrazone compound and 3-octanoylthio-1-propyltriethoxysilane (a silane coupling agent) to a rubber composition containing natural rubber together with carbon black and silica.

The present inventor conducted further research based on this finding and completed the present invention.

Specifically, the rubber composition of the present invention encompasses rubber compositions containing the following: a rubber component, a hydrazone compound, carbon black, silica, and 3-octanoylthio-1-propyltriethoxysilane.

### Item 1.

A rubber composition comprising
a rubber component,
a hydrazone compound,
carbon black,
silica, and
3-octanoylthio-1-propyltriethoxysilane,
wherein
natural rubber is contained in an amount of 50 parts by mass or more in 100 parts by mass of the rubber component;
per 100 parts by mass of the rubber component,
   the hydrazone compound is present in an amount of 0.1 parts by mass to 2 parts by mass,
   the carbon black is present in an amount of 15 parts by mass to 60 parts by mass, and
   the silica is present in an amount of 18 parts by mass to 80 parts by mass; and
per 100 parts by mass of the silica,
   the 3-octanoylthio-1-propyltriethoxysilane is present in an amount of 3 parts by mass to 10 parts by mass.

### Item 2.

The rubber composition according to Item 1, wherein the hydrazone compound is at least one member selected from the group consisting of 3-hydroxy-N'-(1,3-dimethylbutylidene)-2-naphthoic acid hydrazide, 3-hydroxy-2-naphthoic acid hydrazide, N'-(1-methylethylidene)salicylic acid hydrazide, N'-(1-methylpropylidene)salicylic acid hydrazide, N'-(1,3-dimethylbutylidene)salicylic acid hydrazide, N'-(2-furylmethylene)salicylic acid hydrazide, 1-hydroxy-N'-(1-methylethylidene)-2-naphthoic acid hydrazide, 1-hydroxy-N'-(1-methylpropylidene)-2-naphthoic acid hydrazide, 1-hydroxy-N'-(1,3-dimethylbutylidene)-2-naphthoic acid hydrazide, 1-hydroxy-N'-(2-furylmethylene)-2-naphthoic acid hydrazide, 3-hydroxy-N'-(1-methylethylidene)-2-naphthoic acid hydrazide, 3-hydroxy-N'-(1-methylpropylidene)-2-naphthoic acid hydrazide, and 3-hydroxy-N'-(2-furylmethylene)-2-naphthoic acid hydrazide.

### Item 3.

The rubber composition according to Item 1, wherein the hydrazone compound is 3-hydroxy-N'-(1,3-dimethylbutylidene)-2-naphthoic acid hydrazide.

### Advantageous Effects of Invention

The rubber composition of the present invention can improve reinforcement and heat resistance when carbon black and silica are blended with natural rubber, while also improving fuel efficiency, for example, in application in tires.

### Description of Embodiments

The present invention is described in detail below.

The embodiments the represent the present invention are intended to provide a better understanding of the concept of the invention and do not limit the invention unless otherwise specified.

In the present specification, the terms "comprise" and "contain" are concepts that encompass all of "comprising," "consisting essentially of," and "consisting of."

In the present specification, a numerical range indicated as "A to B" means A or more and B or less.

### [1] Rubber Composition

The rubber composition of the present invention contains a rubber component, a hydrazone compound, carbon black, silica, and 3-octanoylthio-1-propyltriethoxysilane.

In the rubber composition, natural rubber is contained in an amount of 50 parts by mass or more in 100 parts by mass of the rubber component.

The rubber composition contains 0.1 to 2 parts by mass of a hydrazone compound, 15 to 60 parts by mass of carbon black, and 18 to 80 parts by mass of silica, per 100 parts by mass of the rubber component.

The rubber composition contains 3 to 10 parts by mass of 3-octanoylthio-1-propyltriethoxysilane per 100 parts by mass of silica.

In the rubber composition of the present invention, the hydrazone compound is preferably 3-hydroxy-N'-(1,3-dimethylbutylidene)-2-naphthoic acid hydrazide.

The rubber composition of the present invention can improve reinforcement and heat resistance when carbon black and silica are blended with natural rubber, while also improving fuel efficiency, for example, in application in tires.

The rubber composition of the present invention is useful particularly as a rubber composition for heavy-duty tires for trucks, buses, aircraft, or industrial vehicles that carry heavy loads, such as in truck tires or bus tires, among applications in tires.

### [1-1] Rubber Component

The rubber composition of the present invention contains a rubber component, and the rubber component contains 50 parts by mass or more of natural rubber in 100 parts by mass of the rubber component.

The natural rubber (NR) is preferably natural rubber latex, technically specified rubber (TSR), ribbed smoked sheet (RSS), gutta-percha, Chinese gutta-percha (*Eucommia ulmoides*)-derived natural rubber, guayule-derived natural rubber, Russian dandelion (*Taraxacum kok-saghyz*)-derived natural rubber, and the like.

Examples of natural rubber include rubber obtained by modifying these types of natural rubber, such as epoxidated natural rubber, methacrylic acid-modified natural rubber, and styrene-modified natural rubber.

For the rubber component other than natural rubber, various types of synthetic diene rubber can be used. Examples of preferred synthetic diene rubber include butadiene rubber (BR), styrene-butadiene copolymer rubber (SBR), isoprene rubber (IR), nitrile rubber (NBR), chloroprene rubber (CR), ethylenepropylene-diene terpolymer rubber (EPDM), styrene-isoprenestyrene triblock copolymers (SIS), styrene-butadiene-styrene triblock copolymers (SBS), and the like; and modified synthetic diene rubber thereof.

Examples of modified synthetic diene rubber include main-chain-modified, one-terminal-modified, both-terminal-modified, or like modified diene rubber. Examples of functional groups of modified synthetic diene rubber include functional groups, such as epoxy, amino, alkoxysilyl, and hydroxyl groups. One or two or more kinds of these functional groups may be included in modified synthetic diene rubber.

The method for producing a synthetic diene rubber is not particularly limited. Examples of the production method include emulsion polymerization, solution polymerization, radical polymerization, anionic polymerization, and cationic polymerization. The glass transition point of synthetic diene rubber is also not particularly limited.

The rubber component other than natural rubber for use is preferably a rubber component such as BR, IR, or SBR, and more preferably BR from the viewpoint of achieving both wear resistance and processability.

The cis/trans/vinyl ratio of the double-bond portion of synthetic diene rubber such as NR and BR is not particularly limited, and any ratio is applicable. The number average molecular weight and molecular weight distribution of synthetic diene rubber such as BR are not particularly limited. The diene rubber preferably has a number average molecular weight of 500 to 3,000,000, and a molecular weight distribution of 1.5 to 15.

The rubber component other than synthetic diene rubber such as NR and BR for use includes polysulfide rubber, silicone rubber, fluororubber, and urethane rubber.

The rubber component may further contain at least one rubber component selected from the group consisting of the rubber components described above in addition to NR, and may contain a mixture (blend) of two or more rubber components.

The rubber component other than NR is preferably a blend of NR and BR or a blend of NR and BR further with IR, SBR, or the like.

The amount of NR in 100 parts by mass of the rubber component is 50 parts by mass or more, and preferably 60 parts by mass or more. The rubber component may be composed of only NR.

When NR and BR are used in combination, the total content of NR and BR is preferably 80 parts by mass or more, and more preferably 90 parts by mass or more, in 100 parts by mass of the rubber component. The rubber component may be composed of only NR and BR.

The rubber composition of the present invention can achieve both wear resistance and low heat build-up due to the configuration described above as the composition of the rubber component.

### [1-2] Hydrazone Compound

The rubber composition of the present invention contains a hydrazone compound in an amount of 0.1 to 2 parts by mass per 100 parts by mass of the rubber component.

The hydrazone compound is preferably 3-hydroxy-N'-(1,3-dimethylbutylidene)-2-naphthoic acid hydrazide, 3-hydroxy-2-naphthoic acid hydrazide, N'-(1-methylethylidene)salicylic acid hydrazide, N'-(1-methylpropylidene)salicylic acid hydrazide, N'-(1,3-dimethylbutylidene)salicylic acid hydrazide, N'-(2-furylmethylene)salicylic acid hydrazide, 1-hydroxy-N'-(1-methylethylidene)-2-naphthoic acid hydrazide, 1-hydroxy-N'-(1-methylpropylidene)-2-naphthoic acid hydrazide, 1-hydroxy-N'-(1,3-dimethylbutylidene)-2-naphthoic acid hydrazide, 1-hydroxy-N'-(2-furylmethylene)-2-naphthoic acid hydrazide, 3-hydroxy-N'-(1-methylethylidene)-2-naphthoic acid hydrazide, 3-hydroxy-N'-(1-methylpropylidene)-2-naphthoic acid hydrazide, 3-hydroxy-N'-(2-furylmethylene)-2-naphthoic acid hydrazide, or the like.

The hydrazone compound for use may be at least one hydrazone compound selected from the group consisting of the hydrazone compounds described above. These hydrazone compounds may be used alone or in a combination (blend) of two or more.

The hydrazone compound is more preferably 3-hydroxy-N'-(1,3-dimethylbutylidene)-2-naphthoic acid hydrazide.

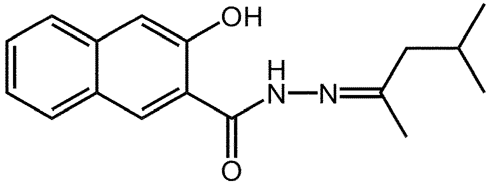

In the rubber composition of the present invention, the reactivity of 3-octanoylthio-1-propyltriethoxysilane with silica or NR is improved due to the hydrazone compound further added when 3-octanoylthio-1-propyltriethoxysilane is blended into a rubber composition containing NR, carbon black, and silica.

This results in improved reinforcement and fuel efficiency of the rubber composition of the present invention, and also results in improved heat resistance due to the hydrazone compound added.

The rubber composition of the present invention contains 0.1 to 2 parts by mass of the hydrazone compound per 100 parts by mass of the rubber component. The rubber composition preferably contains 0.5 to 1.5 parts by mass of the hydrazone compound per 100 parts by mass of the rubber component.

Setting the content of the hydrazone compound to 0.1 to 2 parts by mass leads to excellent processability of the rubber composition and allows the rubber composition to exhibit excellent fuel efficiency (rolling resistance performance) when used in tires.

### [1-3] Carbon Black

The rubber composition of the present invention contains carbon black in an amount of 15 to 60 parts by mass per 100 parts by mass of the rubber component. Incorporating carbon black into the rubber component reduces electric resistance of rubber, thus providing an effect of suppressing electrical charge and an effect of enhancing rubber strength.

Examples of carbon black include high-, middle-, or low-structure SAF, ISAF, IISAF, N110, N134, N220, N234, N330, N339, N375, N550, HAF, FEF, GPF, or SRF-grade carbon black. Of these, SAF, ISAF, IISAF, N134, N234, N330, N339, N375, HAF, or FEF-grade carbon black is preferable.

The DBP absorption of carbon black is not particularly limited and is preferably 60 to 200 cm³/100 g, more preferably 70 to 180 cm³/100 g or more, and even more preferably 80 to 160 cm³/100 g.

The carbon black preferably has a specific surface area by a nitrogen adsorption method (N₂SA, measured according to JIS K6217-2: 2001) of 30 m²/g to 200 m²/g, more preferably 40 m²/g to 180 m²/g, and even more preferably 50 m²/g to 160 m²/g.

The carbon black for use may be commercially available carbon black, such as carbon-silica dual-phase filler.

The carbon black for use may be at least one compound selected from the group consisting of the various types of carbon black described above. These various types of carbon black may be used alone or in a combination (blend) of two or more.

In the rubber composition, the amount of carbon black is 15 to 60 parts by mass, preferably 20 to 50 parts by mass, and more preferably 25 to 40 parts by mass, per 100 parts by mass of the rubber component. In the rubber composition, setting the amount of carbon black to 15 to 60 parts by mass per 100 parts by mass of the rubber component results in excellent processability of the rubber composition, and also results in excellent coloring when the rubber composition is used in tires.

### [1-4] Silica

The rubber composition of the present invention contains silica in an amount of 18 to 80 parts by mass per 100 parts by mass of the rubber component.

The silica for use is preferably wet silica, dry silica, or colloidal silica, and more preferably wet silica. To enhance affinity for the rubber component, the surface of these kinds of silica may be organically treated.

The BET specific surface area of silica is not particularly limited and may be, for example, within the range of 40 to 350 m²/g. Silica that has a BET specific surface area within this range is advantageous in terms of the achievement of both rubber reinforcement and dispersibility in the rubber component. The BET specific surface area is measured according to ISO 5794/1.

From this viewpoint, the silica preferably has a BET specific surface area of 80 to 300 m²/g, more preferably 100 to 270 m²/g, and particularly preferably 110 to 270 m²/g.

Examples of commercially available silica products include products under the following trade names: HD165MP (BET specific surface area: 165 m²/g), HD115MP (BET specific surface area: 115 m²/g), HD200MP (BET specific surface area: 200 m²/g), and HD250MP (BET specific surface area: 250 m²/g), all produced by Quechen Silicon Chemical Co., Ltd.; Nipsil AQ (BET specific surface area: 205 m²/g) and Nipsil KQ (BET specific surface area: 240 m²/g), both produced by Tosoh Silica Corporation; and Ultrasil VN3 (BET specific surface area: 175 m²/g) produced by Degussa AG.

The silica for use may be at least one compound selected from the group consisting of the various kinds of silica described above. These various kinds of silica may be used alone or in a combination (blend) of two or more.

In the rubber composition, the amount of silica is 18 to 80 parts by mass, preferably 19 to 45 parts by mass, and more preferably 20 to 40 parts by mass, per 100 parts by mass of the rubber component. In the rubber composition, setting the amount of silica to 18 to 80 parts by mass per 100 parts by mass of the rubber component allows the rubber composition to achieve both low heat build-up and wear resistance.

### [1-5] Silane Coupling Agent

The rubber composition of the present invention contains, in addition to silica, 3-octanoylthio-1-propyltriethoxysilane as a silane coupling agent, and contains 3 to 10 parts by mass of 3-octanoylthio-1-propyltriethoxysilane per 100 parts by mass of silica.

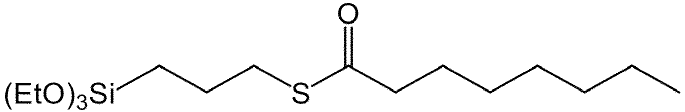

Adding a silane coupling agent can enhance the reinforcement of the rubber composition and can also enhance the tear strength and wear resistance of the rubber composition.

In the rubber composition of the present invention, when carbon black and silica are blended with natural rubber, 3-octanoylthio-1-propyltriethoxysilane is also blended together with a hydrazone compound; this improves reinforcement and fuel efficiency while also improving heat resistance.

In the rubber composition of the present invention, another silane coupling agent, a titanate coupling agent, an aluminate coupling agent, and a zirconate coupling agent may be added in combination.

The silane coupling agent is not particularly limited, and commercially available products can be suitably used. Examples of silane coupling agents include sulfide, polysulfide, thioester, thiol, olefin, epoxy, amino, or alkyl silane coupling agents. The silane coupling agent for use is preferably bis(3-triethoxysilylpropyl)tetrasulfide.

The titanate coupling agent is not particularly limited, and commercially available products can be suitably used. Examples of titanate coupling agents include alkoxide, chelate, or acylate titanate coupling agents.

The aluminate coupling agent is not particularly limited, and commercially available products can be suitably used.

The zirconate coupling agent is not particularly limited, and commercially available products can be suitably used. Examples of zirconate coupling agents include alkoxide, chelate, or acylate zirconate coupling agents.

The other silane coupling agent, titanate coupling agent, aluminate coupling agent, or zirconate coupling agent may be at least one compound selected from the group consisting of the compounds described above. These compounds may be used alone or in a combination (blend) of two or more.

In the rubber composition, 3-octanoylthio-1-propyltriethoxysilane is present in an amount of 3 to 10 parts by mass, preferably 4 to 9 parts by mass, and more preferably 5 to 8 parts by mass, per 100 parts by mass of silica.

In the rubber composition, setting the amount of 3-octanoylthio-1-propyltriethoxysilane to 3 to 10 parts by mass per 100 parts by mass of silica improves reinforcement and fuel efficiency when carbon black and silica are blended with natural rubber, additionally with 3-octanoylthio-1-propyltriethoxysilane and a hydrazone compound, while also improving heat resistance.

### [1-6] Other Agents

In addition to the components above, the rubber composition of the present invention may suitably contain agents that are commonly used in the rubber industry, such as inorganic fillers other than carbon black and silica, vulcanizing agents, vulcanization accelerators, vulcanization acceleration aids, antioxidants, softeners, plasticizers, antiscorching agents, ozone protectants, foaming agents, and vulcanization retarders.

### Inorganic Filler

Examples of inorganic fillers that can be added include calcium carbonate (CaCO₃), alumina (Al₂O₃), alumina hydrate (Al₂O₃·H₂O) , aluminum hydroxide (Al(OH)₃), aluminum carbonate (Al₂(CO₃)₃), magnesium hydroxide (Mg(OH)₂), magnesium oxide (MgO), magnesium carbonate (MgCO₃), talc (3MgO.4SiO₂.H₂O), attapulgite (5MgO.8SiO₂.9H₂O), titanium white (TiO₂), titanium black (TiO₂ₙ₋₁), calcium oxide (CaO), calcium hydroxide (Ca(OH)₂), aluminum magnesium oxide (MgO.Al₂O₃), clay (Al₂O₃.2SiO₂), kaolin (Al₂O₃.2SiO₂.2H₂O), pyrophyllite (Al₂O₃.4SiO₂.H₂O), bentonite (Al₂O₃.4SiO₂.2H₂O), aluminum silicate (Al₂SiO₅, Al₄.SSiO₄.5H₂O, etc.), magnesium silicate (Mg₂SiO₄, MgSiO₃, etc.), calcium silicate (Ca₂.SiO₄, etc.), aluminum calcium silicate (Al₂O₃.CaO.2SiO₂, etc.), magnesium calcium silicate (CaMgSiO₄), zirconium oxide (ZrO₂), zirconium hydroxide (ZrO(OH)₂.nH₂O), zirconium carbonate (Zr(CO₃)₂), zinc acrylate, zinc methacrylate, and crystalline aluminosilicates containing hydrogen, alkali metal, or alkaline earth metal that compensate charge, such as various types of zeolites.

The inorganic filler may be at least one selected from the group consisting of the inorganic fillers above. These inorganic fillers may be used alone or in a combination (blend) of two or more.

### Vulcanizing Agent

The vulcanizing agent that can be added may be an organic peroxide or a sulfur-based vulcanizing agent.

Examples of organic peroxides that can be added include benzoyl peroxide, dicumyl peroxide, di-t-butyl peroxide, t-butylcumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3, 1,3-bis(t-butylperoxypropyl)benzene, di-t-butylperoxy-diisopropylbenzene, t-butylperoxybenzene, 2,4-dichlorobenzoyl peroxide, 1,1-di-t-butylperoxy-3,3,5-trimethylsiloxane, and n-butyl-4,4-di-t-butylperoxyvalerate. Of these organic peroxides, dicumyl peroxide, t-butylperoxybenzene, and di-t-butylperoxy-diisopropylbenzene are preferred.

Examples of sulfur-based vulcanizing agents that can be added include sulfur and morpholine disulfide. Of sulfur-based vulcanizing agents, sulfur is preferred.

The vulcanizing agent for use may be at least one selected from the group consisting of the vulcanizing agents above. These vulcanizing agents may be used alone or in a combination (blend) of two or more.

### Vulcanization Accelerator

Examples of vulcanization accelerators that can be added include sulfonamide compounds, thiazole compounds, thiuram compounds, thiourea compounds, guanidine compounds, dithiocarbamic acid compounds, aldehyde-amine compounds, and aldehyde-ammonia compounds.

Examples of vulcanization acceleration aids that can be added include stearic acid and zinc flower (zinc oxide).

The vulcanization accelerator and vulcanization acceleration aid may be each at least one vulcanization accelerator and at least one vulcanization acceleration aid selected from the group consisting of the vulcanization accelerators and vulcanization acceleration aids described above. These vulcanization accelerators and vulcanization acceleration aids may be used alone or in a combination (blend) of two or more.

### Antioxidant

Examples of antioxidants that can be added include amine compounds, phenol compounds, imidazole compounds, metal carbamates, and wax.

The antioxidant may be at least one selected from the group consisting of the antioxidants above. These antioxidants may be used alone or in a combination (blend) of two or more.

### Softener

Examples of softeners that can be added include petroleum-based softeners, such as process oil, lubricating oil, paraffin, liquid paraffin, petroleum asphalt, and Vaseline; fatty oil-based softeners, such as castor oil, linseed oil, rapeseed oil, and coconut oil; wax, such as tall oil, factice, beeswax, carnauba wax, and lanolin; and fatty acids, such as linoleic acid, palmitic acid, stearic acid, and lauric acid.

The softener may be at least one selected from the group consisting of the softeners above. These softeners may be used alone or in a combination (blend) of two or more.

Adding a softener further improves kneading processability.

### Plasticizer

Examples of plasticizers that can be added include DMP (dimethyl phthalate), DEP (diethyl phthalate), DBP (dibutyl phthalate), DHP (diheptyl phthalate), DOP (dioctyl phthalate), DINP (diisononyl phthalate), DIDP (diisodecyl phthalate), BBP (benzyl butyl phthalate), DLP (dilauryl phthalate), DCHP (dicyclohexyl phthalate), hydrophthalic anhydride ester, DOZ (di-2-ethylhexyl azelate), DBS (dibutyl sebacate), DOS (dioctyl sebacate), acetyl triethyl citrate, acetyl tributyl citrate, DBM (dibutyl maleate), DOM (2-ethylhexyl maleate), and DBF (dibutyl fumarate).

The plasticizer may be at least one selected from the group consisting of the plasticizers above. These plasticizers may be used alone or in a combination (blend) of two or more.

### Antiscorching Agent

Examples of antiscorching agents that can be added include organic acids, such as phthalic anhydride, salicylic acid, and benzoic acid; nitroso compounds, such as N-nitrosodiphenylamine; and N-cyclohexylthiophthalimide.

The antiscorching agent may be at least one selected from the group consisting of the antiscorching agents above. These antiscorching agents may be used alone or in a combination (blend) of two or more.

### [2] Production Method for Rubber Composition

In the production method for the rubber composition of the present invention, when carbon black and silica are blended with NR, a hydrazone compound is also blended together with 3-octanoylthio-1-propyltriethoxysilane. This improves the reactivity between 3-octanoylthio-1-propyltriethoxysilane and silica.

As a result, the rubber composition of the present invention exhibits improved reinforcement and fuel efficiency, while also exhibiting improved heat resistance due to the incorporation of the hydrazone compound.

The rubber composition of the present invention can be obtained by kneading the components by using a kneader such as an open kneader (e.g., a roll mixer) or a closed kneader (e.g., a Banbury mixer). After the rubber composition is molded, the molded product can be subjected to vulcanization at 140 to 190°C for 5 to 120 minutes; the resulting products can be used in various rubber products.

### [3] Tire

The rubber composition of the present invention is preferably used in tires, in particular, in components such as a tire tread, undertread, carcass, sidewall, and bead portion.

The tire of the present invention has low heat build-up, which reduces the rolling resistance of the tire and provides excellent fuel efficiency. Additionally, due to excellence in high-load resistance, the tire can be suitably used in tires for heavy-load vehicles such as trucks, buses, aircraft, and industrial vehicles (heavy-load tires).

Although embodiments of the present invention are described above, the present invention is not limited to these embodiments. It goes without saying that the present invention can be performed in various forms without departing from the spirit and scope of the invention.

### Examples

The following describes embodiments of the present invention in more detail with reference to Examples.

The present invention is not limited to the Examples.

### [1] Production of Rubber Composition (Test Composition)

The components shown in Table 1 below were mixed in the ratio (parts by mass) as shown, and the mixture was kneaded for 5 minutes by adjusting the rotation speed such that the maximum temperature of the mixture reached 160°C with a Plastomill, thereby producing a rubber composition.

### [2] Evaluation Test of Rubber Composition

The rubber compositions prepared in the Examples and Comparative Examples were evaluated for low heat build-up, reinforcement, and heat resistance.

### (1) Low Heat Build-up (tan δ index)

The rubber compositions prepared in the Examples and Comparative Examples were vulcanized at 150°C for 25 minutes to obtain vulcanized rubber.

The loss tangent (tan δ) of the obtained vulcanized rubber was measured with a viscoelasticity measurement device (manufactured by TA Instruments) at room temperature, a dynamic strain of 5%, and a frequency of 15 Hz.

In the evaluation, the low heat build-up based on the loss tangent (tan δ) of the rubber composition of each sample was expressed as a low heat build-up index, which was expressed as a reciprocal index based on the tan δ value of Comparative Example 1 set to 100.

A higher low heat build-up index indicates better low heat build-up.

### (2) Reinforcement

The rubber compositions prepared in the Examples and Comparative Examples were subjected to measurement of 300% modulus at room temperature and at 500 mm/min in a dumbbell No. 3 test in accordance with JIS K6251.

In the evaluation, the reinforcement based on the 300% modulus of the rubber composition of each sample was expressed as a reinforcement index, which was shown as an index based on the value of the 300% modulus of Comparative Example 1 set to 100.

A higher reinforcement index indicates better reinforcement.

### (3) Heat Resistance

The rubber compositions prepared in the Examples and Comparative Examples were aged in a Geer oven at 100°C for 72 hours, and the change in tensile strength was measured by a tensile test in accordance with JIS K6257.

In the evaluation, the heat resistance based on the change in tensile strength of the rubber composition of each sample was expressed as a heat resistance index, which was shown as an index based on the change in tensile strength in the tensile test of Comparative Example 1 set to 100.

A higher heat resistance index indicates better heat resistance.

Tables 1 to 4 show the results.

**Table 1**

| Table 1 | | | | | | | | | |
|---|---|---|---|---|---|---|---|---|---|
| | | Comparative Example 1 | Comparative Example 3 | Comparative Example 2 | Example 1-1 | Example 1-2 | Example 1 | Example 1-3 | Example 1-4 |
| Formulas of Rubber Composition | | (Parts by Mass) | | | | | | | |
| | Natural Rubber | 80 | 80 | 80 | 80 | 80 | 80 | 80 | 80 |
| | Butadiene Rubber | 20 | 20 | 20 | 20 | 20 | 20 | 20 | 20 |
| | Carbon Black | 30 | 30 | 30 | 30 | 30 | 30 | 30 | 30 |
| | Silica | 20 | 20 | 20 | 20 | 20 | 20 | 20 | 20 |
| | Hydrazone Compound | - | - | 1 | 0.1 | 0.6 | 1 | 1.5 | 2 |
| | Silane Coupling Agent 1 | - | 1.6 | - | 1.6 | 1.6 | 1.6 | 1.6 | 1.6 |
| | Silane Coupling Agent 2 | 1.6 | - | 1.6 | - | - | - | - | - |
| | Antioxidant | 2 | 2 | 2 | 2 | 2 | 2 | 2 | 2 |
| | Wax | 2 | 2 | 2 | 2 | 2 | 2 | 2 | 2 |
| | Stearic Acid | 2 | 2 | 2 | 2 | 2 | 2 | 2 | 2 |
| | Zinc Flower | 3 | 3 | 3 | 3 | 3 | 3 | 3 | 3 |
| | Vulcanization Accelerator | 1.2 | 1.2 | 1.2 | 1.2 | 1.2 | 1.2 | 1.2 | 1.2 |
| | Sulfur | 2 | 2 | 2 | 2 | 2 | 2 | 2 | 2 |

| Rubber Composition Evaluation Results | | (INDEX) | | | | | | | |
|---|---|---|---|---|---|---|---|---|---|
| | Fuel Efficiency Index | 100 | 112 | 110 | 118 | 124 | 131 | 135 | 137 |
| | Reinforcement Index | 100 | 110 | 101 | 112 | 113 | 115 | 115 | 115 |
| | Heat Resistance Index | 100 | 96 | 121 | 110 | 115 | 120 | 127 | 130 |

**Table 2**

| Table 2 | | | | | | | | |
|---|---|---|---|---|---|---|---|---|
| | | Comparative Example 1 | Comparative Example 2 | Example 2-1 | Example 2-2 | Example 1 | Example 2-3 | Example 2-4 |
| Formulas of Rubber Composition | | (Parts by Mass) | | | | | | |
| | Natural Rubber | 80 | 80 | 80 | 80 | 80 | 80 | 80 |
| | Butadiene Rubber | 20 | 20 | 20 | 20 | 20 | 20 | 20 |
| | Carbon Black | 30 | 30 | 30 | 30 | 30 | 30 | 30 |
| | Silica | 20 | 20 | 20 | 20 | 20 | 20 | 20 |
| | Hydrazone Compound | - | 1 | 1 | 1 | 1 | 1 | 1 |
| | Silane Coupling Agent 1 | - | - | 0.6 | 1.2 | 1.6 | 1.8 | 2 |
| | Silane Coupling Agent 2 | 1.6 | 1.6 | - | - | - | - | - |
| | Antioxidant | 2 | 2 | 2 | 2 | 2 | 2 | 2 |
| | Wax | 2 | 2 | 2 | 2 | 2 | 2 | 2 |
| | Stearic Acid | 2 | 2 | 2 | 2 | 2 | 2 | 2 |
| | Zinc Flower | 3 | 3 | 3 | 3 | 3 | 3 | 3 |
| | Vulcanization Accelerator | 1.2 | 1.2 | 1.2 | 1.2 | 1.2 | 1.2 | 1.2 |
| | Sulfur | 2 | 2 | 2 | 2 | 2 | 2 | 2 |

| Rubber Composition Evaluation Results | | (INDEX) | | | | | | |
|---|---|---|---|---|---|---|---|---|
| | Fuel Efficiency Index | 100 | 110 | 115 | 122 | 131 | 133 | 135 |
| | Reinforcement Index | 100 | 101 | 106 | 110 | 115 | 118 | 120 |
| | Heat Resistance Index | 100 | 121 | 117 | 119 | 120 | 121 | 122 |

**Table 3**

| Table 3 | | | | | | |
|---|---|---|---|---|---|---|
| | | Comparative Example 1 | Comparative Example 2 | Example 3-1 | Example 1 | Example 3-2 |
| Formulas of Rubber Composition | | (Parts by Mass) | | | | |
| | Natural Rubber | 80 | 80 | 80 | 80 | 80 |
| | Butadiene Rubber | 20 | 20 | 20 | 20 | 20 |
| | Carbon Black | 30 | 30 | 15 | 30 | 40 |
| | Silica | 20 | 20 | 35 | 20 | 15 |
| | Hydrazone Compound | - | 1 | 1 | 1 | 1 |
| | Silane Coupling Agent 1 | - | - | 1.6 | 1.6 | 1.6 |
| | Silane Coupling Agent 2 | 1.6 | 1.6 | - | - | - |
| | Antioxidant | 2 | 2 | 2 | 2 | 2 |
| | Wax | 2 | 2 | 2 | 2 | 2 |
| | Stearic Acid | 2 | 2 | 2 | 2 | 2 |
| | Zinc Flower | 3 | 3 | 3 | 3 | 3 |
| | Vulcanization Accelerator | 1.2 | 1.2 | 1.2 | 1.2 | 1.2 |
| | Sulfur | 2 | 2 | 2 | 2 | 2 |

| Rubber Composition Evaluation Results | | (INDEX) | | | | |
|---|---|---|---|---|---|---|
| | Fuel Efficiency Index | 100 | 110 | 141 | 131 | 118 |
| | Reinforcement Index | 100 | 101 | 112 | 115 | 114 |
| | Heat Resistance Index | 100 | 121 | 118 | 120 | 123 |

**Table 4**

| Table 4 | | | | | | |
|---|---|---|---|---|---|---|
| | | Comparative Example 1 | Comparative Example 2 | Example 4-1 | Example 1 | Example 4-2 |
| Formulas of Rubber Composition | | (Parts by Mass) | | | | |
| | Natural Rubber | 80 | 80 | 80 | 80 | 80 |
| | Butadiene Rubber | 20 | 20 | 20 | 20 | 20 |
| | Carbon Black | 30 | 30 | 32 | 30 | 5 |
| | Silica | 20 | 20 | 18 | 20 | 50 |
| | Hydrazone Compound | - | 1 | 1 | 1 | 1 |
| | Silane Coupling Agent 1 | - | - | 1.44 | 1.6 | 3.2 |
| | Silane Coupling Agent 2 | 1.6 | 1.6 | - | - | - |
| | Antioxidant | 2 | 2 | 2 | 2 | 2 |
| | Wax | 2 | 2 | 2 | 2 | 2 |
| | Stearic Acid | 2 | 2 | 2 | 2 | 2 |
| | Zinc Flower | 3 | 3 | 3 | 3 | 3 |
| | Vulcanization Accelerator | 1.2 | 1.2 | 1.2 | 1.2 | 1.2 |
| | Sulfur | 2 | 2 | 2 | 2 | 2 |

| Rubber Composition Evaluation Results | | (INDEX) | | | | |
|---|---|---|---|---|---|---|
| | Fuel Efficiency Index | 100 | 110 | 129 | 131 | 140 |
| | Reinforcement Index | 100 | 101 | 113 | 115 | 112 |
| | Heat Resistance Index | 100 | 121 | 118 | 120 | 121 |

Natural rubber: TSR-20, manufactured by Guangken Rubber
Butadiene rubber: product name: BR150B, manufactured by UBE Corporation
Carbon black: grade N234
Silica: product name: Nipsil (brand AQ), manufactured by Tosoh Silica Corporation
Hydrazone compound: 3-hydroxy-N'-(1,3-dimethylbutylidene)-2-naphthoic acid hydrazide
Silane coupling agent 1: 3-octanoylthio-1-propyltriethoxysilane
Silane coupling agent 2: Bis(3-triethoxysilylpropyl) disulfide Antioxidant: N-phenyl-N'-(1,3-dimethylbutyl)-p-phenylenediamine (6-PPD)
Wax: product name: Antilux 111, manufactured by Rhein Chemie Rheinau GmbH
Vulcanization accelerator: N-cyclohexyl-2-benzothiazole sulfenamide (CBS)

In the rubber composition of the Examples, when carbon black and silica were blended with NR, a hydrazone compound was also blended together with 3-octanoylthio-1-propyltriethoxysilane. This improved reinforcement and fuel efficiency, while also improving heat resistance due to the incorporation of the hydrazone compound.

### Industrial Applicability

The rubber composition of the present invention can improve reinforcement and heat resistance while also improving fuel efficiency, for example, in application in tires, due to a combination of a hydrazone compound and 3-octanoylthio-1-propyltriethoxysilane (a silane coupling agent) added to a rubber composition containing natural rubber together with carbon black and silica.

The rubber composition of the present invention is useful particularly as a rubber composition for heavy-duty tires for trucks, buses, aircraft, or industrial vehicles that carry heavy loads, such as in truck tires or bus tires, among applications in tires.

## Claims

1. A rubber composition comprising
a rubber component,
a hydrazone compound,
carbon black,
silica, and
3-octanoylthio-1-propyltriethoxysilane,
wherein
natural rubber is contained in an amount of 50 parts by mass or more in 100 parts by mass of the rubber component;
per 100 parts by mass of the rubber component,
the hydrazone compound is present in an amount of 0.1 parts by mass to 2 parts by mass,
the carbon black is present in an amount of 15 parts by mass to 60 parts by mass, and
the silica is present in an amount of 18 parts by mass to 80 parts by mass; and
per 100 parts by mass of the silica,
the 3-octanoylthio-1-propyltriethoxysilane is present in an amount of 3 parts by mass to 10 parts by mass.

2. The rubber composition according to claim 1, wherein the hydrazone compound is at least one member selected from the group consisting of 3-hydroxy-N'-(1,3-dimethylbutylidene)-2-naphthoic acid hydrazide, 3-hydroxy-2-naphthoic acid hydrazide, N'-(1-methylethylidene)salicylic acid hydrazide, N'-(1-methylpropylidene)salicylic acid hydrazide, N'-(1,3-dimethylbutylidene)salicylic acid hydrazide, N'-(2-furylmethylene)salicylic acid hydrazide, 1-hydroxy-N'-(1-methylethylidene)-2-naphthoic acid hydrazide, 1-hydroxy-N'-(1-methylpropylidene)-2-naphthoic acid hydrazide, 1-hydroxy-N'-(1,3-dimethylbutylidene)-2-naphthoic acid hydrazide, 1-hydroxy-N'-(2-furylmethylene)-2-naphthoic acid hydrazide, 3-hydroxy-N'-(1-methylethylidene)-2-naphthoic acid hydrazide, 3-hydroxy-N'-(1-methylpropylidene)-2-naphthoic acid hydrazide, and 3-hydroxy-N'-(2-furylmethylene)-2-naphthoic acid hydrazide.

3. The rubber composition according to claim 1, wherein the hydrazone compound is 3-hydroxy-N'-(1,3-dimethylbutylidene)-2-naphthoic acid hydrazide.
